# FASCICULE DE BREVET EUROPEEN

(11) **EP 1 341 975 B1**
(45) Date de publication et mention de la délivrance du brevet: **12.07.2006**
(21) Numéro de dépôt: 01992814.2
(22) Date de dépôt: 05.11.2001
(51) Int. Cl.: E04B 9/04, E04B 9/30, D06N 3/08, D04B 1/16, D06N 3/00, B32B 27/12, B44C 7/02, B29C 63/40, G09F 15/00, B29C 51/16

(54) **PROCEDE DE REALISATION D'UN PANNEAU SENSIBLEMENT PLAN TENDU SUR UN CADRE ET PANNEAU OBTENU**
VERFAHREN ZUR HERSTELLUNG EINES AUF EINEN RAHMEN GESPANNTEN FLÄCHENGEBILDES UND SICH ERGEBENDES FLÄCHENGEBILDE
METHOD FOR PRODUCING A PANEL SUBSTANTIALLY STRETCHED ON A FRAME AND RESULTING PANEL

(30) Priorité: 06.11.2000 FR 0014156
(43) Date de publication de la demande: 10.09.2003
(73) Titulaire: CLIPSO Swiss AG, 4123 Allschwil (CH)
(72) Inventeur: GEIS, Bernard, F-68100 Mulhouse (FR); KATZ, Alexandre, F-68200 Mulhouse (FR)
(74) Mandataire: Nithardt, Roland
(86) Numéro de dépôt international: PCT/FR2001/003413
(87) Numéro de publication internationale: WO 2002/036897

(56) Documents cités:
- WO-A-91/07541
- FR-A- 2 619 531
- FR-A- 2 738 847
- US-A- 3 782 495
- US-A- 4 248 647

## Description

### Domaine technique

La présente invention concerne un procédé de réalisation d'un panneau sensiblement plan tendu sur un cadre, ce panneau étant fabriqué à partir d'un matériau textile souple et thermo-rétrécissant et un panneau obtenu selon ledit procédé.

### Technique antérieure

Différents procédés de réalisation de panneaux plans sont connus et notamment pour la réalisation de faux-plafonds dans le domaine de la construction.

Une première solution consiste à utiliser des lès de PVC soudés et pré-assemblés en usine pour former une feuille. Cette feuille est ensuite accrochée le long de ses bords à un cadre formé par exemple au moyen de profilés de fixation. Pour obtenir un panneau bien tendu, la pose de la feuille doit être confiée à un spécialiste et nécessite un équipement spécifique.

Une deuxième solution, (voir le FR-A-2 738 847), plus facile à mettre en oeuvre, consiste à utiliser des feuilles réalisées en non-tissés. Ces dernières peuvent être peintes et comporter des motifs décoratifs. D'installation aisée, elles permettent un changement de décors fréquent mais nécessitent toutefois d'être tendues pour éviter tout phénomène de plis ou de gondolement. Cette mise sous tension est de manière générale laborieuse et ne permet pas d'obtenir une tension homogène dans toutes les directions de la feuille.

Une troisième solution notamment décrite dans la publication FR-A-2 552 473 consiste à utiliser une feuille thermo-étirable. Avant fixation sur le cadre, la feuille est soumise à une forte élévation de température pour être étirée. Elle est fixée dans son état étiré le long de ses bords dans un cadre formé de profilés de maintien. La source de chaleur est alors supprimée de sorte que la feuille se rétracte en refroidissant et se tende sur le cadre. Avant sa pose, cette feuille doit être coupée avec précision à des dimensions compatibles avec celles du cadre, en anticipant son pourcentage d'étirement et de rétraction. Une coupe à des dimensions trop petites ne permettra pas que cette feuille soit étendue suffisamment pour l'accrocher au cadre. Une coupe a des dimensions trop grandes génèrera des déchets et donc un surcoût de matière. De plus, pour permettre l'étirement de la feuille et obtenir après fixation une tension homogène sur toute sa surface, la feuille doit être chauffée en une fois et dans son ensemble à une température d'environ 50 à 60°C. Pour obtenir cette élévation de température homogène, toute la pièce dans laquelle va être posée la feuille doit être chauffée à cette température. Par conséquent, ce procédé est difficilement utilisable dans des pièces de grandes dimensions et par des personnes non spécialisées. Il génère des coûts de mise en oeuvre élevés ainsi que des conditions de travail difficiles pour les poseurs. De plus, ce chauffage peut provoquer la détérioration d'autres éléments présents dans la pièce (meubles, revêtement de sol, ...).

Une quatrième solution notamment décrite dans la publication FR-A-2 619 531 consiste à utiliser une toile thermo-rétrécissante accrochée sur un cadre, la toile est fixée non tendue au cadre puis soumise à une forte élévation de température lui permettant de se rétracter et de se tendre sur le cadre. Cette toile est par exemple réalisée en PVC. Ce procédé permet ainsi de réaliser un panneau, de manière simple et sans nécessiter l'intervention de spécialistes. Néanmoins, ce procédé ne permet pas d'obtenir un résultat optimal car le panneau n'est pas tendu de façon homogène dans toutes les directions.

Aucune solution ne permet donc d'apporter une réponse satisfaisante au problème posé.

### Exposé de l'invention

La présente invention vise donc à pallier cet inconvénient en proposant un procédé de réalisation de panneau, permettant d'obtenir, simplement, économiquement, dans de bonnes conditions de travail et sans influence sur l'environnement, un panneau, même de grandes dimensions, tendu de façon homogène dans toutes ses directions. L'invention propose également un panneau réalisé en une seule pièce sans couture ni soudure, pouvant avoir de grandes dimensions et permettant d'obtenir sa tension, homogène dans toutes les directions et inégalée à ce jour.

Dans ce but, l'invention concerne un procédé de réalisation d'un panneau sensiblement plan du genre indiqué en préambule, caractérisé en ce qu'il comporte les étapes de :
- fabrication d'une bande d'un matériau textile souple à partir de fils textiles synthétiques selon un procédé de tricotage pour former des mailles déformables dans toutes les directions,
- enduction du matériau textile souple sur au moins une de ses faces au moyen d'un mélange d'enduction comportant au moins un polymère ayant des caractéristiques élastomères à l'état polymérisé et une substance colorante couvrante,
- polymérisation du polymère contenu dans le mélange d'enduction,
- découpe dans le matériau textile souple d'une feuille dont les dimensions sont légèrement supérieures à celles du cadre,
- fixation du cadre sur une cloison ou un plafond, ce cadre étant constitué de profilés de maintien formant un cadre fermé,
- engagement des bords périphériques de la feuille dans lesdits profilés de maintien et,
- chauffage local en au moins une zone la feuille pour provoquer le thermo-rétrécissement du matériau textile.

On découpe de préférence les bords de la feuille qui dépassent des profilés de maintien à ras desdits profilés de maintien et/ou on rentre le surplus dans lesdits profilés au moyen d'une spatule.

Selon une caractéristique avantageuse, les fils textiles synthétiques constituant la base du matériau textile souple comprennent des fils de polyester thermo-rétrécissants.

Selon une autre caractéristique avantageuse, le mélange d'enduction contient en outre une substance ignifuge.

Selon un mode de réalisation préféré, le mélange d'enduction est constitué d'une pâte que l'on dépose sous la forme d'au moins un boudin sur au moins une partie de la largeur du matériau textile souple et que l'on fait pénétrer dans les mailles du matériau textile avant d'effectuer la polymérisation du polymère contenu dans le mélange d'enduction.

Le polymère contenu dans le mélange d'enduction contient de préférence du polyuréthane.

La substance colorante couvrante contient avantageusement en outre de l'oxyde de titane et/ou des pigments colorés et/ou des éléments décoratifs se présentant au moins sous une forme choisie dans le groupe comprenant au moins des poudres, des paillettes, des granulés, des pellicules de substances minérales et/ou synthétiques et/ou un mélange de ces éléments.

Selon un mode de réalisation avantageux, on effectue une impression de la feuille selon un procédé d'impression numérique.

On forme de préférence le cadre avec des profilés de maintien comportant deux mâchoires de serrage opposées.

L'invention concerne également un panneau sensiblement plan tendu sur un cadre fixé sur un support, ce cadre étant constitué de profilés de maintien formant un cadre fermé, caractérisé en ce qu'il est réalisé à partir d'une feuille dont les dimensions sont légèrement supérieures à celles du cadre à réaliser, cette feuille étant découpée dans une bande textile réalisée à partir de fils textiles synthétiques selon un procédé de tricotage, pour former des mailles déformables dans toutes les directions, cette bande textile étant enduite sur au moins une de ses faces au moyen d'un mélange d'enduction comportant au moins un polymère ayant des caractéristiques élastomères à l'état polymérisé et une substance colorante couvrante, le polymère contenu dans le mélange étant polymérisé, les bords périphériques de la feuille étant engagés dans les profilés de maintien constituant le cadre, les bords de la feuille qui dépassent des profilés étant coupés à ras des profilés de maintien après un chauffage local de la feuille agencé pour provoquer son thermo-rétrécissement et sa tension.

Selon un mode de réalisation particulièrement avantageux, le panneau comporte au moins sur une partie d'une de ses faces au moins une image imprimée numériquement choisie par exemple dans le groupe comprenant au moins une image décorative, une représentation publicitaire, un plan, une inscription.

Selon un autre mode de réalisation, le panneau comporte de manière avantageuse un traitement de surface obtenu par au moins un procédé choisi dans le groupe comprenant au moins la fixation par ultraviolets, le greffage moléculaire.

Ce traitement de surface est de préférence agencé pour conférer au panneau des propriétés choisies dans le groupe comprenant au moins des propriétés antiseptiques, anti-insectes, antistatiques, désinfectantes.

### Description sommaire des dessins

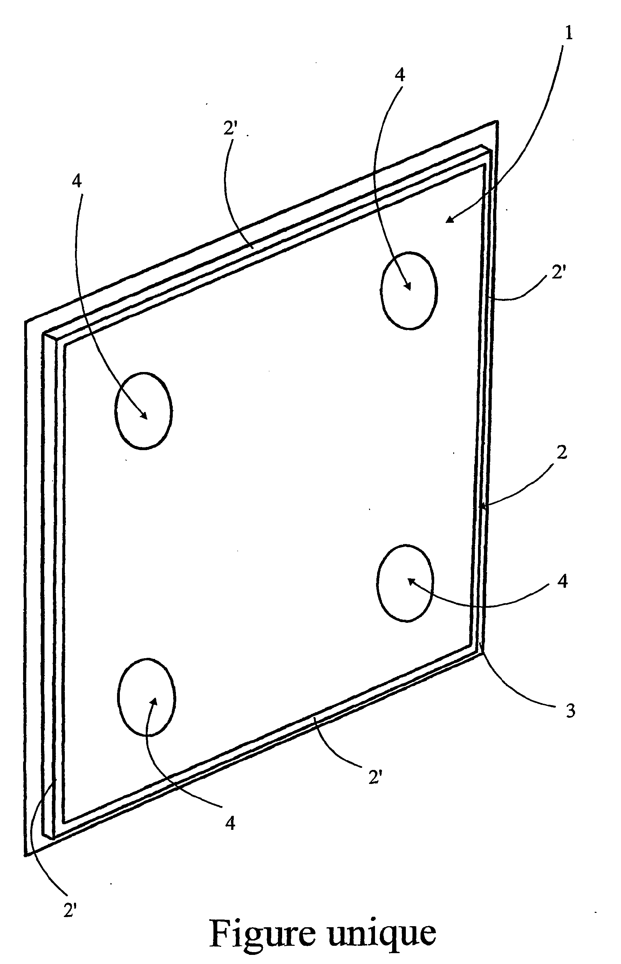

La présente invention et ses avantages apparaîtront mieux dans la description suivante d'un exemple de réalisation en référence à la figure unique représentant un panneau obtenu par le procédé selon l'invention.

### Manière de réaliser l'invention

En référence à cette figure unique, le procédé de réalisation d'un panneau 1 sensiblement plan, tendu sur un cadre 2 comporte les étapes successives décrites ci-après.

Dans un premier temps, on fabrique une bande d'un matériau textile souple à partir de fils textiles synthétiques, par exemple au moyen d'un procédé de tricotage, ce matériau textile souple comportant des mailles déformables dans toutes les directions. Les fils sont notamment des fils textiles de polyester thermo-rétrécissants ou toute autre matière textile équivalente.

Dans un deuxième temps, on enduit une ou les deux faces de la bande d'un mélange d'enduction comportant un polymère élastomère à l'état polymérisé. Ce polymère contient par exemple du polyuréthane ou toute autre matière équivalente. L'enduction de polyuréthane procure notamment au matériau textile un aspect esthétique lisse et uniforme. Le matériau textile souple enduit présente de plus l'avantage d'être imperméable à la poussière, d'être lavable et de pouvoir être peint avec toute peinture disponible dans le commerce ou imprimé.

Le mélange d'enduction peut comporter une substance ignifuge permettant de protéger le panneau 1 réalisé contre les flammes et d'être classé non-feu de classe M1.

Le mélange d'enduction peut également comporter une substance colorante couvrante permettant d'obtenir un panneau 1 d'aspect encore plus uniforme sur toute sa surface dans une couleur donnée. On peut par exemple utiliser une substance colorante contenant en outre de l'oxyde de titane. Cette substance colorante peut également comporter des pigments colorés et/ou des éléments décoratifs tels que par exemple des poudres, des paillettes, des granulés, des pellicules de substances minérales et/ou synthétiques et/ou un mélange de ces éléments.

Le mélange d'enduction est par exemple constitué d'une pâte que l'on dépose sur toute la largeur du matériau textile souple et sur les deux faces de ce matériau textile souple sous la forme de boudins, par exemple d'un boudin par côté. La bande de matériau textile souple se présente par exemple sous la forme d'une bobine et est déroulé longitudinalement sous une buse de dépôt animée par exemple d'un mouvement transversal alternatif permettant le dépôt des boudins sur toute la largeur du matériau textile souple. On force cette pâte à pénétrer des deux côtés du matériau textile souple à l'intérieur de ses mailles, par exemple entre deux rouleaux presseurs qui permettent également de régulariser le dépôt sur toute la surface de la bande. Il est tout à fait envisageable de ne déposer qu'un seul boudin sur une seule face de la bande On fera alors pénétrer la pâte de manière à ce qu'elle traverse le matériau textile souple et qu'elle ressorte du côté non enduit pour pouvoir être répartie sur toute la surface du matériau textile souple. La bonne répartition de la pâte pourra également être obtenue en utilisant, des raclettes remplaçant ou complétant l'utilisation des rouleaux. L'enduction des deux faces du matériau textile souple peut se faire en une seule opération ou en deux opérations successives entre lesquelles le matériau textile souple est retourné. La pâte déposée sous forme de boudin peut être fluidifiée par exemple au moyen d'un chauffage à ultrasons facilitant sa pénétration dans le matériau textile souple.

Dans un troisième temps, on polymérise le polymère contenu dans le mélange d'enduction afin de conférer au matériau textile souple les caractéristiques élastomères propre au polymère utilisé et notamment sa caractéristique de thermo-rétrécissement. On obtient ainsi un matériau textile souple thermo-rétrécissant que l'on peut mettre par exemple sous la forme d'un rouleau à dérouler selon les besoins. Au cours de cette étape de polymérisation, les bords latéraux du matériau textile souple sont de préférence maintenus, par exemple au moyen d'une chaîne à picots, pour éviter que le matériau textile souple ne subisse trop d'effet de termo-rétrécissement.

Dans un quatrième temps, on découpe dans le matériau textile souple ainsi obtenu, une feuille destinée à former le panneau 1. On découpe cette feuille de sorte que ses dimensions soient légèrement supérieures à celles du cadre 2. Comme expliqué dans la suite de la description, cette découpe n'a pas besoin d'être effectuée avec une précision spécifique. Lors de cette découpe, on anticipera bien entendu le thremo-rétrécissement de la feuille. D'une manière non limitative, le pourcentage de rétraction de ce type de matériau textile est de l'ordre de 5 à 10%.

Dans un cinquième temps, on fixe le cadre 2 sur un support 3 formant une cloison ou un plafond. Ce cadre 2 est constitué de profilés de maintien 2', par exemple quatre, comportant chacun par exemple deux mâchoires de serrage opposées (non représentées). Ces profilés de maintien 2' sont disposés de manière à former un cadre fermé. Les profilés de maintien 2' peuvent également être fixés sur des supports 3 différents pour réaliser un panneau 1 entre deux parois ou un panneau 1 fixé verticalement sur le sol.

Dans un sixième temps, on engage les bords périphériques de la feuille entre les mâchoires de serrage des profilés de maintien 2'. La feuille accrochée le long de ses bords périphériques est prétendue lors de sa pose sur le cadre 2.

Dans un septième temps, on chauffe localement aux endroits comportant des plis ou un manque de tension la feuille pour provoquer le thermo-rétrécissement du matériau textile souple. Pour ce faire, on positionne l'extrémité chauffante d'un canon à chaleur, monté par exemple sur un chariot mobile, à une distance d'environ 20 à 30 cm de la feuille en regard de la zone prédéterminée de la feuille à tendre. On déplace éventuellement le canon à chaleur vers une seconde zone. De manière préférentielle, on déplace le canon à chaleur selon une trajectoire par exemple rectiligne décalée d'une ligne à l'autre dans le but de balayer toute la surface de la feuille. L'utilisation d'une source de chaleur localisée sous la forme d'un canon à chaleur chauffé à environ 200°C permet d'obtenir une rétraction rapide de chaque zone chauffée de la feuille, sans nécessiter de chauffer l'ensemble de la pièce qui reste à température ambiante. Ainsi, la réalisation d'un panneau 1 tendu d'un seul tenant dans de grandes pièces est possible, de manière rapide, simplifiée, et sans risque de détérioration des revêtements de surfaces ou des meubles présents dans la pièce. L'étape de pose du panneau 1 se fait donc dans un environnement à température ambiante et ne génère pas de conditions de travail difficiles pour les poseurs.

Selon les dimensions de la feuille, on peut couper les bords de la feuille qui dépassent des profilés de maintien 2' au ras de ces profilés de maintien 2'. Ainsi aucune partie de la feuille entourant le panneau 1 ne subsiste. Cette étape permet d'une part de ne pas avoir à découper la feuille avec une précision spécifique et de plus, d'obtenir un bon niveau de finition du panneau 1. Pour obtenir un résultat similaire, on peut également insérer les bords de la feuille qui dépassent, dans les profilés de fixation 2'. Cette découpe et/ou insertion peut être effectuée avant ou après l'étape de thermo-rétrécissement. Avant la fixation de la feuille, on peut prévoir de l'imprimer par exemple au moyen d'un procédé d'impression numérique.

Ce type de procédé permet la réalisation d'un panneau 1 sensiblement plan tendu sur un cadre 2 pour former une cloison, un plafond 3, un panneau publicitaire. Ce panneau 1 a une résistance mécanique jusqu'à quinze fois supérieure à celles des revêtements de surface classique par exemple en PVC. Ce panneau 1 peut de plus comporter en différents endroits de sa face couvrante, des découpes 4 formant des motifs décoratifs ou des perçages prévus pour intégrer des spots d'éclairage.

On peut modifier facilement l'aspect esthétique du panneau 1, soit en intégrant des éléments décoratifs, des pigments dans le mélange d'enduction utilisé pendant le procédé de réalisation ou après la pose du panneau 1 par impression d'une image, peinture ou tout autre moyen équivalent. Le panneau 1 peut également être réversible et comporter sur chaque face un décor différent. L'image peut être une image décorative, une représentation publicitaire, un plan, une inscription ou tout autre type d'image.

Selon une variante de réalisation particulièrement intéressante, le panneau 1 comporte un traitement de surface obtenu par exemple par fixation par ultraviolets, greffage moléculaire ou tout autre procédé équivalent. Ce traitement de surface permet de conférer au panneau 1 des propriétés antiseptiques, anti-insectes, antistatiques, désinfectantes ou toute autre propriété adaptée.

### Possibilités d'application industrielles

Le panneau 1 et son procédé de réalisation peuvent bien entendu être utilisés pour réaliser tout type de panneau 1, par exemple de recouvrement de paroi dans le but d'effectuer par exemple des décorations murales aussi bien que des faux plafonds tendus. Les profilés de fixation 2' utilisés dans ce procédé de pose de faux plafonds peuvent être de différents types.

Cette description démontre clairement que l'invention permet d'atteindre tous les objectifs fixés et notamment d'obtenir une tension homogène du panneau 1 dans toutes les directions tout en permettant une réalisation simple, rapide et économique. La présente invention n'est pas limitée à l'exemple de réalisation décrit mais s'étend à toute modification et variante évidentes pour un homme du métier, tout en restant dans l'étendue de la protection définie dans les revendications annexées.

## Revendications

1. Procédé de réalisation d'un panneau (1) sensiblement plan, comprenant une feuille tendue sur un cadre (2) fixé sur un support, la feuille (1) étant fabriqué à partir d'un matériau textile souple et thermo-rétrécissant, **caractérisé en ce que** :
- l'on fabrique une bande dudit matériau textile souple à partir de fils textiles synthétiques selon un procédé de tricotage pour former des mailles déformables dans toutes les directions,
- l'on enduit ledit matériau textile souple sur au moins une de ses faces au moyen d'un mélange d'enduction comportant au moins un polymère ayant des caractéristiques élastomères à l'état polymérisé et une substance colorante couvrante,
- l'on procède à une polymérisation dudit polymère contenu dans ledit mélange d'enduction,
- l'on découpe dans ledit matériau textile souple une feuille dont les dimensions sont légèrement supérieures à celles dudit cadre (2),
- l'on fixe ledit cadre (2) sur un support (3), ce cadre (2) étant constitué de profilés de maintien (2') formant un cadre fermé,
- l'on engage les bords périphériques de ladite feuille dans lesdits profilés de maintien (2'), et
- l'on chauffe localement en au moins une zone ladite feuille pour provoquer le thermo-rétrécissement dudit matériau textile souple.

2. Procédé de réalisation selon la revendication 1, **caractérisé en ce que** l'on coupe les bords de ladite feuille qui dépassent desdits profilés de maintien (2'), à ras desdits profilés de maintien (2').

3. Procédé de réalisation selon la revendication 1, **caractérisé en ce que** lesdits fils textiles synthétiques constituant la base dudit matériau textile souple comprennent des fils de polyester thermo-rétrécissants.

4. Procédé de réalisation selon la revendication 1, **caractérisé en ce que** ledit mélange d'enduction contient en outre une substance ignifuge.

5. Procédé de réalisation selon la revendication 1, **caractérisé en ce que** ledit mélange d'enduction est constitué d'une pâte, **en ce que** l'on dépose cette pâte sous la forme d'au moins un boudin sur au moins une partie de la largeur dudit matériau textile souple et **en ce que** l'on fait pénétrer cette pâte dans lesdites mailles dudit matériau textile souple fabriqué selon un procédé de tricotage avant d'effectuer ladite polymérisation dudit polymère contenu dans ledit mélange d'enduction.

6. Procédé de réalisation selon la revendication 5, **caractérisé en ce que** ledit polymère contenu dans ledit mélange d'enduction contient du polyuréthane.

7. Procédé de réalisation selon la revendication 1, **caractérisé en ce que** ladite substance colorante couvrante contient en outre de l'oxyde de titane.

8. Procédé de réalisation selon la revendication 1, **caractérisé en ce que** ladite substance colorante couvrante contient en outre des pigments colorés.

9. Procédé de réalisation selon la revendication 1, **caractérisé en ce que** ladite substance colorante couvrante comporte des éléments décoratifs se présentant au moins sous une forme choisie dans le groupe comprenant au moins des poudres, des paillettes, des granulés, des pellicules de substances minérales et/ou synthétiques et/ou un mélange de ces éléments.

10. Procédé de réalisation selon la revendication 1, **caractérisé en ce que** l'on effectue une impression de ladite feuille.

11. Procédé de réalisation selon la revendication 10, **caractérisé en ce que** l'on effectue ladite impression selon un procédé d'impression numérique.

12. Procédé de réalisation selon la revendication 1, **caractérisé en ce que** l'on forme ledit cadre (2) avec des profilés de maintien (2') comportant deux mâchoires de serrage opposées.

13. Panneau (1) sensiblement plan comprenant une feuille tendue sur un cadre (2) fixé sur un support (3), ce cadre (2) étant constitué de profilés de maintien (2') formant un cadre fermé, **caractérisé en ce qu'**il est réalisé à partir d'une feuille dont les dimensions sont légèrement supérieures à celles dudit cadre (2), cette feuille étant découpée dans une bande textile réalisée à partir de fils textiles synthétiques selon un procédé de tricotage, pour former des mailles déformables dans toutes les directions, cette bande textile étant enduite sur au moins une de ses faces au moyen d'un mélange d'enduction comportant au moins un polymère ayant des caractéristiques élastomères à l'état polymérisé et une substance colorante couvrante, ledit polymère contenu dans ledit mélange étant polymérisé, les bords périphériques de ladite feuille étant engagés dans lesdits profilés de maintien (2') constituant ledit cadre (2), ladite feuille étant localement chauffée en au moins une zone pour provoquer son thermo-rétrécissement et sa tension.

14. Panneau (1) selon la revendication 13, **caractérisé en ce que** lesdits fils textiles synthétiques comprennent des fils de polyester thermo-rétrécissants et **en ce que** ledit polymère dudit mélange d'enduction contient du polyuréthane.

15. Panneau (1) selon la revendication 13, **caractérisé en ce que** ledit mélange d'enduction contient une substance ignifuge.

16. Panneau (1) selon la revendication 13, **caractérisé en ce que** ladite substance colorante couvrante contient de l'oxyde de titane.

17. Panneau (1) selon la revendication 13, **caractérisé en ce que** ladite substance colorante couvrante contient en outre des pigments colorés.

18. Panneau (1) selon la revendication 13, **caractérisé en ce que** ladite substance colorante couvrante contient en outre des éléments décoratifs se présentant sous une forme choisie dans le groupe comprenant au moins des poudres, des paillettes, des granulés, des pellicules de substances minérales et/ou synthétiques et/ou un mélange de ces éléments.

19. Panneau (1) selon la revendication 13, **caractérisé en ce qu'**il comporte au moins sur une partie d'une de ses faces au moins une image imprimée numériquement.

20. Panneau (1) selon la revendication 19, **caractérisé en ce que** ladite image imprimée est choisie dans le groupe comprenant au moins une image décorative, une représentation publicitaire, un plan, une inscription.

21. Panneau (1) selon la revendication 19, **caractérisé en ce qu'**il comporte un traitement de surface obtenu par au moins un procédé choisi dans le groupe comprenant au moins la fixation par ultraviolets, le greffage moléculaire.

22. Panneau (1) selon la revendication 21, **caractérisé en ce que** ledit traitement de surface est agencé pour conférer audit panneau (1) des propriétés choisies dans le groupe comprenant au moins des propriétés antiseptiques, anti-insectes, antistatiques, désinfectantes.

## Claims

1. A method for producing a panel (1) substantially flat, comprising a sheet stretched over a frame (2) attached to a support, the sheet (1) being formed from a flexible and heat-shrinkable textile material, **characterized in that**:
- a piece of said flexible textile material is made from synthetic textile threads according to a knitting method in order to form meshes that can be deformed in all directions;
- said flexible textile material is coated on at least one of its sides by means of a coating mixture containing at least one polymer with elastomeric characteristics in the polymerised state and a covering colouring substance,
- said polymer contained in said coating mixture is polymerised;
- a sheet whose dimensions are slightly greater than those of said frame (2) is cut into said flexible textile material,
- the frame (2) is attached to support (3), this frame (2) being made up of retaining profiled sections (2') forming a closed frame,
- peripheral edges of said sheet are engaged in said retaining profiled sections (2'), and
- at least one zone of said sheet is heated in order to bring about the beat shrinking of said flexible textile material.

2. The production method according to claim 1, **characterized in that** edges of said sheet extending past said retaining profiled sections (2') are cut flush with said retaining profiled sections (2').

3. The production method according to claim 1, **characterized in that** said synthetic textile threads constituting the basis of said flexible textile material include heat-shrinkable polyester threads.

4. The production method according to claim 1, **characterized in that** said coating mixture further contains a flame retardant substance.

5. The production method according to claim 1, **characterized in that** said coating mixture consists of a paste, **in that** said paste is deposited in the form of at least one extruded rope over at least a part of the width of said flexible textile material, and **in that** said paste penetrates into the meshes of said flexible textile material produced according to a knitting method before to make said polymerisation of said polymer contained in said coating mixture.

6. The production method according to claim 5, **characterized in that** said polymer in said coating mixture contains polyurethane.

7. The production method according to claim 1, **characterized in that** said covering colouring substance further includes titanium oxide.

8. The production method according to claim 1, **characterized in that** said covering colouring substance further includes coloured pigments.

9. The production method according to claim 1, **characterized in that** said covering colouring substance includes decorative elements at least in a form chosen from the group comprising at least of powders, flakes, granules, films of mineral and/or synthetic substances, and/or a mixture thereof.

10. The production method according to claim 1, **characterized in that** a printing of said sheet is executed.

11. The production method according to claim 10, **characterized in that** said printing is executed according to a digital printing technique.

12. The production method according to claim 1, **characterized in that** said frame (2) is formed with retaining profiled sections (2') having two opposite clamping jaws.

13. A panel (1) substantially flat comprising a sheet stretched on a frame (2) attached to a support (3), this frame (2) comprising retaining profiled sections (2') forming a closed frame, **characterized in that** said panel is formed from a sheet whose dimensions are slightly greater than those of said frame (2), this sheet being cut out from a textile fabric produced from synthetic textile threads according to a knitting method in order to form meshes that can be deformed in all directions, this textile fabric being coated on at least one of its sides with a coating mixture containing at least one polymer having elastomeric characteristics in the polymerised state and a covering colouring substance, said polymer contained in said mixture being polymerised, peripheral edges of said sheet being engaged in said retaining profiled sections (2') constituting said frame (2), and said sheet being locally heated in at least one zone in order to bring about heat shrinking and tightening within said frame.

14. A panel (1) according to claim 13, **characterized in that** said synthetic textile threads include heat-shrinkable polyester threads and **in that** said polymer of said coating mixture contains polyurethane.

15. A panel (1) according to claim 13, **characterized in that** said coating mixture includes a flame retardant substance.

16. A panel (1) according to claim 13, **characterized in that** said covering colouring substance includes titanium oxide.

17. A panel (1) according to claim 13, **characterized in that** said covering colouring substance further includes coloured pigments.

18. A panel (1) according to claim 13, **characterized in that** said covering colouring substance further includes decorative elements present in a form chosen from the group comprising at least powders, flakes, granules, films of mineral and/or synthetic substances and/or a mixture of these elements.

19. A panel (1) according to claim 13, **characterized in that** it comprise at least one digitally printed image on at least a part of one said panel sides.

20. A panel (1) according to claim 19, **characterized in that** said printed image is chosen from the group comprising at least a decorative image, an advertising representation, a drawing, an inscription.

21. A panel (1) according to claim 19, **characterized in that** it comprise a surface treatment obtained by a method chosen from the group comprising at least ultraviolet binding and molecular grafting.

22. A panel (1) according to claim 21, **characterized in that** said surface treatment is designed to provide said panel (I) with properties chosen from the group comprising at least antiseptic, insecticidal, antistatic, and disinfectant properties.

## Patentansprüche

1. Verfahren zur Herstellung einer praktisch ebenen Tafel (1), die einen Bogen umfasst, der auf einen Rahmen (2) gespannt ist, der auf einem Träger befestigt ist, wobei der Bogen (1) aus einem flexiblen und wärmeschrumpfenden Textilwerkstoff hergestellt ist,
**dadurch gekennzeichnet, dass**
- ein Band aus dem flexiblen Textilwerkstoff aus synthetischen Textilfasern nach einem Strickverfahren hergestellt wird, um in alle Richtungen verformbare Maschen auszubilden,
- der flexible Textilwerkstoff auf mindestens einer seiner Seiten mittels einer Streichmischung überzogen wird, die mindestens ein Polymer aufweist, welches im polymerisierten Zustand elastomere Eigenschaften und eine färbende deckende Substanz aufweist,
- eine Polymerisation des in der Streichmischung enthaltenen Polymers durchgeführt wird,
- aus dem flexiblen Textilwerkstoff ein Bogen ausgeschnitten wird, dessen Abmessungen etwas größer als diejenigen des Rahmens (2) sind,
- der Rahmen (2) auf einem Träger (3) befestigt wird, wobei der Rahmen (2) aus Halteprofilen (2') besteht, die einen geschlossenen Rahmen ausbilden,
- dass die Umfangsränder des Bogens in den Halteprofilen (2') in Eingriff gebracht werden, und
- in mindestens einer Zone des Bogens eine örtliche Erwärmung durchgeführt wird, um die Wärmeschrumpfung des wärmeschrumpfenden flexiblen Werkstoffes hervorzurufen.

2. Herstellungsverfahren nach Anspruch 1,
**dadurch gekennzeichnet, dass** die Ränder des Bogens, welche die Halteprofile (2') überragen, auf die gleiche Höhe der Halteprofile (2') abgeschnitten werden.

3. Herstellungsverfahren nach Anspruch 1,
**dadurch gekennzeichnet, dass** die synthetischen Textilfasern, welche die Basis des flexiblen Textilwerkstoffes darstellen, wärmeschrumpfende Fasern aus Polyester umfassen.

4. Herstellungsverfahren nach Anspruch 1,
**dadurch gekennzeichnet, dass** die Streichmischung außerdem eine feuerfeste Substanz enthält.

5. Herstellungsverfahren nach Anspruch 1,
**dadurch gekennzeichnet, dass** die Streichmischung aus einer Paste besteht, dass die Paste in Form mindestens eines Wulstes auf mindestens einem Teil der Breite des flexiblen Textilwerkstoffes abgelagert wird, und dass das Eindringen dieser Paste in die Maschen des gemäß einem Strickverfahren hergestellten flexiblen Textilwerkstoffes vor der Durchführung der Polymerisation des in der Streichmischung enthaltenen Polymers herbeigeführt wird.

6. Herstellungsverfahren nach Anspruch 5,
**dadurch gekennzeichnet, dass** das in der Streichmischung enthaltene Polymer Polyurethan enthält.

7. Herstellungsverfahren nach Anspruch 1,
**dadurch gekennzeichnet, dass** die färbende deckende Substanz außerdem Titanoxid enthält.

8. Herstellungsverfahren nach Anspruch 1,
**dadurch gekennzeichnet, dass** die färbende deckende Substanz außerdem farbige Pigmente enthält.

9. Herstellungsverfahren nach Anspruch 1,
**dadurch gekennzeichnet, dass** die färbende deckende Substanz dekorative Elemente umfasst, die mindestens eine Form aufweisen, die aus der Gruppe ausgewählt ist, die mindestens Pulver, Flocken, Körnchen, dünne Folien aus mineralischen und/oder synthetischen Substanzen und/oder eine Mischung dieser Elemente umfasst.

10. Herstellungsverfahren nach Anspruch 1,
**dadurch gekennzeichnet, dass** ein Bedrucken des Bogens durchgeführt wird.

11. Herstellungsverfahren nach Anspruch 10,
**dadurch gekennzeichnet, dass** das Bedrucken gemäß einem numerischen Druckverfahren durchgeführt wird.

12. Herstellungsverfahren nach Anspruch 1,
**dadurch gekennzeichnet, dass** der Rahmen (2) mit Halteprofilen (2') zwei einander gegenüberliegende Klemmbacken aufweist.

13. Praktisch ebene Tafel (1), die einen Bogen umfasst, der auf einen Rahmen (2) gespannt ist, der auf einem Träger (3) befestigt ist, wobei der Rahmen (2) aus Halteprofilen (2') besteht, die einen geschlossenen Rahmen ausbilden,
**dadurch gekennzeichnet, dass** sie aus einem Bogen hergestellt ist, dessen Abmessungen etwas größer als diejenigen des Rahmens (2) sind, wobei der Bogen aus einem Textilband ausgeschnitten ist, welches aus synthetischen Textilfasern gemäß einem Strickverfahren hergestellt wird, um in alle Richtungen verformbare Maschen auszubilden, wobei das Textilband auf mindestens einer seiner Seiten mittels einer Streichmischung überzogen ist, die mindestens ein Polymer aufweist, welches im polymerisierten Zustand elastomere Eigenschaften und eine färbende deckende Substanz aufweist, wobei das Polymer in der polymerisierten Streichmischung enthalten ist, wobei die Umfangsränder des Bogens in den Halteprofilen (2') in Eingriff gebracht werden, die den Rahmen (2) darstellen, wobei der Bogen in mindestens einer Zone örtlich erwärmt wird, um die Wärmeschrumpfung des wärmeschrumpfenden flexiblen Werkstoffes und seine Spannung hervorzurufen.

14. Tafel (1) nach Anspruch 13,
**dadurch gekennzeichnet, dass** die synthetischen Textilfasern wärmeschrumpfende Fasern aus Polyester umfassen, und dass das Polymer der Streichmischung Polyurethan enthält.

15. Tafel (1) nach Anspruch 13,
**dadurch gekennzeichnet, dass** die Streichmischung eine feuerfeste Substanz enthält.

16. Tafel (1) nach Anspruch 13,
**dadurch gekennzeichnet, dass** die färbende deckende Substanz Titanoxid enthält.

17. Tafel (1) nach Anspruch 13,
**dadurch gekennzeichnet, dass** die färbende deckende Substanz außerdem farbige Pigmente enthält.

18. Tafel (1) nach Anspruch 13,
**dadurch gekennzeichnet, dass** die färbende deckende Substanz außerdem dekorative Elemente umfasst, die mindestens eine Form aufweisen, die aus der Gruppe ausgewählt ist, die mindestens Pulver, Flocken, Körnchen, dünne Folien aus mineralischen und/oder synthetischen Substanzen und/oder eine Mischung dieser Elemente umfasst.

19. Tafel (1) nach Anspruch 13,
**dadurch gekennzeichnet, dass** sie auf mindestens einem Teil ihrer Flächen mindestens ein numerisch gedrucktes Bild aufweist.

20. Tafel (1) nach Anspruch 19,
**dadurch gekennzeichnet, dass** das Bild aus der Gruppe ausgewählt ist, die mindestens ein dekoratives Bild, eine Werbedarstellung, einen Plan, eine Aufschrift umfasst.

21. Tafel (1) nach Anspruch 19,
**dadurch gekennzeichnet, dass** sie eine Oberflächenbehandlung umfasst, die durch mindestens ein Verfahren erhalten wird, welches aus der Gruppe ausgewählt ist, die mindestens die Fixierung durch UV-Strahlen, molekulare Polymerisation umfasst.

22. Tafel (1) nach Anspruch 21,
**dadurch gekennzeichnet, dass** die Oberflächenbehandlung vorgenommen wird, um der Tafel (1) Eigenschaften zu verleihen, die aus der Gruppe ausgewählt sind, die mindestens keimtötende, insektenvernichtende, antistatische, desinfizierende Eigenschaften umfasst.
